# EUROPEAN PATENT SPECIFICATION

(11) **EP 1 330 386 B1**
(45) Date of publication and mention of the grant of the patent: **01.12.2004**
(21) Application number: 01979181.3
(22) Date of filing: 26.10.2001
(51) Int. Cl.: B62D 33/037, B62D 33/02

(54) **A LOCKING DEVICE AT A LOADING FLAP OF A VEHICLE**
VERRIEGELUNGSVORRICHTUNG AN EINER LADEKLAPPE EINES FAHRZEUGS
DISPOSITIF DE VERROUILLAGE SUR VOLET DE CHARGEMENT

(30) Priority: 26.10.2000 SE 0003902; 26.10.2000 SE 0003901
(43) Date of publication of application: 30.07.2003
(73) Proprietor: Rosen, Göran, 640 50 Björnlunda (SE)
(72) Inventor: Rosen, Göran, 640 50 Björnlunda (SE)
(74) Representative: Hammond, Andrew David
(86) International application number: PCT/SE2001/002356
(87) International publication number: WO 2002/034611

(56) References cited:
- EP-A1- 0 457 972
- DE-A1- 19 611 063
- DE-U1- 29 815 650

## Description

### TECHNICAL FIELD

The present invention relates to a locking device at a vehicle flap.

A locking device according to the features of the preamble of claim 1 is known from EP-A-457 972.

### THE BACKGROUND OF THE INVENTION AND THE UNDERLYING PROBLEM

Already known locking devices at vehicle flaps have locking components, which have a head and a shaft and a locking member attached to a part of a vehicle, the locking component being arranged to be attached to the locking member. When a flap is opened and a force is present and acting upon the inside of the flap, which force originates from for example a load which is placed on the platform and which has been displaced or has tipped over against the flap, there is a risk for the person who opens the locking device that the load and/or the flap hits the person. This may cause serious injuries.

In the case there are two flaps which are to be locked to each other in a corner this means that the space for locking devices will be very delimited.

### THE OBJECT OF THE INVENTION AND THE SOLUTION OF THE PROBLEM

The object of the invention is to solve some of the problems mentioned above. This is obtained by a device according to the claim 1.

The dependent claims describe further preferred embodiments of the invention.

### DESCRIPTION OF THE DRAWINGS

With reference to the appended drawings, the invention will be described more closely in examples of embodiment.

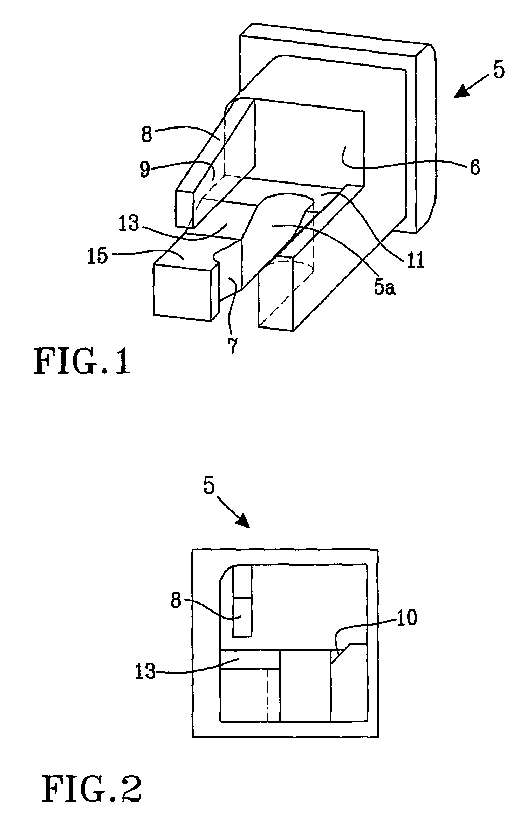

Fig. 1 shows a schematic figure in perspective of a locking member according to the invention.
Fig. 2 shows a schematic figure in a view from below of the locking member according to the invention.
Fig. 3 shows a schematic figure in perspective of the locking member according to the invention.
Fig. 3a shows a partial view of the locking member in fig. 3.
Fig. 4 shows a schematic section view from below of the locking device according to the invention in an unloaded position.
Fig. 5 shows a schematical section view from below of the locking device according to the invention having a force acting upon a first flap.
Fig. 6 shows a schematical section view from below of the locking device according to the invention having a force acting upon a second flap.
Fig. 7 shows an opened locking device at two flaps in a corner.

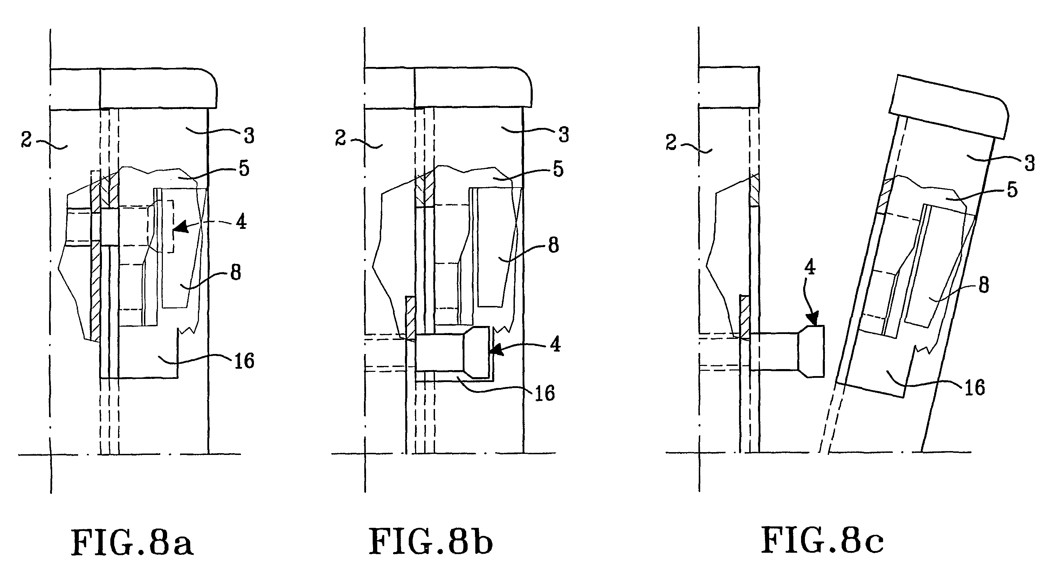

Fig. 8a, 8b and 8c show the locking device in a locked position, and an open position and in an open position with one flap pulled out, respectively.

### DESCRIPTION OF EXAMPLES OF EMBODIMENT

A locking device is generally indicated in the drawing by the reference numeral 1. The device 1 is arranged to lock two flaps 2, 3 together in a substantially right-angled corner of a vehicle platform. The loading flaps 2, 3 are pivotally attached to the platform at the lower edges 2b, 3b thereof and the flaps may optionally be locked together at the upper edges 2a, 3a thereof by means of the locking device 1.

The device 1 has a locking component 4 movably attached to the first flap 2. The locking component 4 has a head 4a and a shaft 4b. The head 4a has a greater diameter than the shaft 4b and has a first surface 4c in a plane perpendicular to the shaft 4b, a second surface 4d having an angle of approximately 30-60° and preferably 45° in relation to the shaft, and a third surface 4e in a plane parallel with the shaft.

The locking component 4 is arranged to slide in a locking member 5 attached to the other flap 3. The locking member 5 comprises a slot 5a arranged with an extension substantially from an upper wall 6 of the locking member and in the longitudinal direction of the locking member 5, i.e. downwards in the flap 3. The shaft 4b of the locking component is arranged to slide in the slot 5a and the head 4a is arranged to slide adjacent thereto and to prevent the locking component 4 to pass through the slot 5a. In the upper wall 6 there is an innermost position to the locking component 4, which is the position corresponding to a locked locking device 1. A short distance from this locking position along the slot 5a there is a recess 7, which is arranged on the side of the slot 5a and adjacent thereto and which suitably has a shape corresponding to the locking component 4.

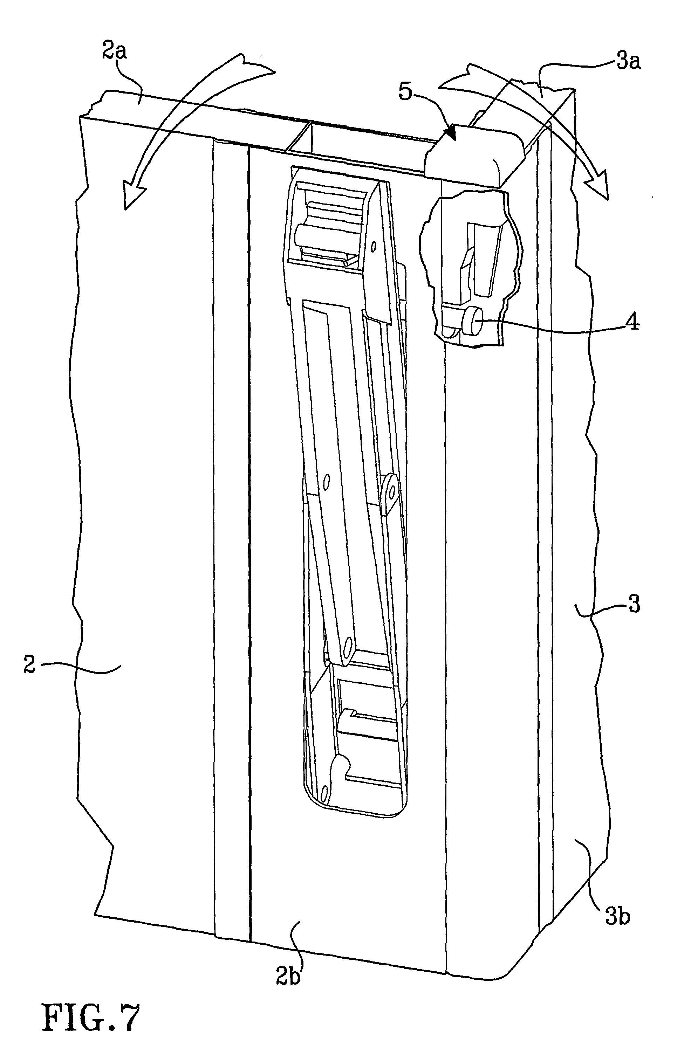

A further distance from the wall 6 there is an open position 5c of the locking device 1 where the locking component has left the locking member 5 and the flaps may be lowered, see fig. 7. Furthermore, the locking member 5 has a protruding part 8 with a sliding surface 9 directed toward the locking component 4. The part 8 extends from the wall 6 and beyond the recess 7 and at least at the recess 7 said part is arranged resilient and arranged to be moved away during spring action in the case a certain smallest force F or a greater force acting upon one or the both flaps 2, 3 when being opened and enable the locking component to reach the recess 7. Thus, the locking component 4 is moved toward the recess 7 and the opening is obstructed. Thereby it is indicated to a person, who opens the locking device 1, that there is a force F acting upon the flap 2, 3 which originates for example from a load on the platform which load has been displaced or tipped over. A person may then close the locking device 1 and inspect the platform and adjust the load.

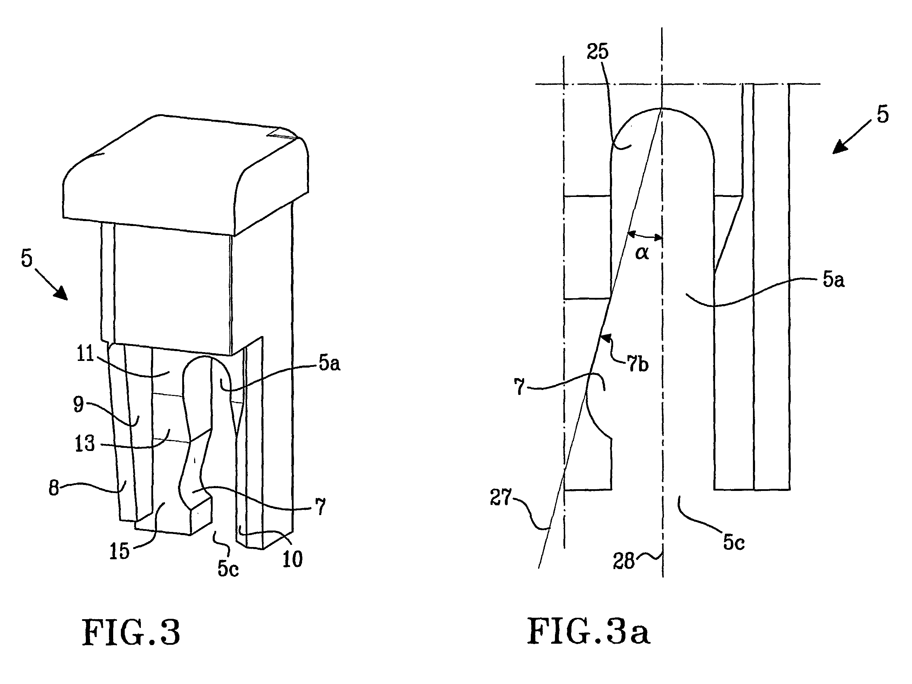

In fig. 3 a the locking member 5 from fig. 3 is illustrated in an enlarged plane partial view. The recess 7 is designed so that a movement of the locking component 4, from the recess and in a direction from the position of the locking component in which the locking device is open, is feasible by means of a small force relatively to what is required in a movement of the locking component from the recess and in the opposite direction. This means that after a movement of the locking component 4 from the locked position 25 to the recess 7, there is a small resistance against movement back toward the locked position 25, whereas there is a relatively great resistance against movement of the locking component 4 from the recess 7 in a direction toward the open position 5c. For this purpose the recess 7 has a delimit surface 7b which has a shape and extension which facilitate the return of the locking component 4. An extension direction 27 of the delimit surface 7b forms an angle α with the main longitudinal direction 28 of the slot 5a which is less than 45°, with advantage less than 30°, and preferably less than or equal to 20°. In the illustrated embodiment α is approximately equal to 15°.

When there is an indication that some flap 2 is loaded, i.e. the locking component 4 will arrive in the recess 7 when the locking device is opened, thus the locking component 4 may be brought back to the original position 25 and the load which has given rise to the force acting upon the flap 2 is looked over and is attended to, so that the flap 2 then may be opened in a safe way.

In the case there is no force F acting upon the flap 2, 3 the protruding part 8, and thereby the slide surface 9, is arranged not to be moved away during spring action, whereby the slide surface 9 guides the locking component 4 beyond the recess 7 and towards the open position 5c.

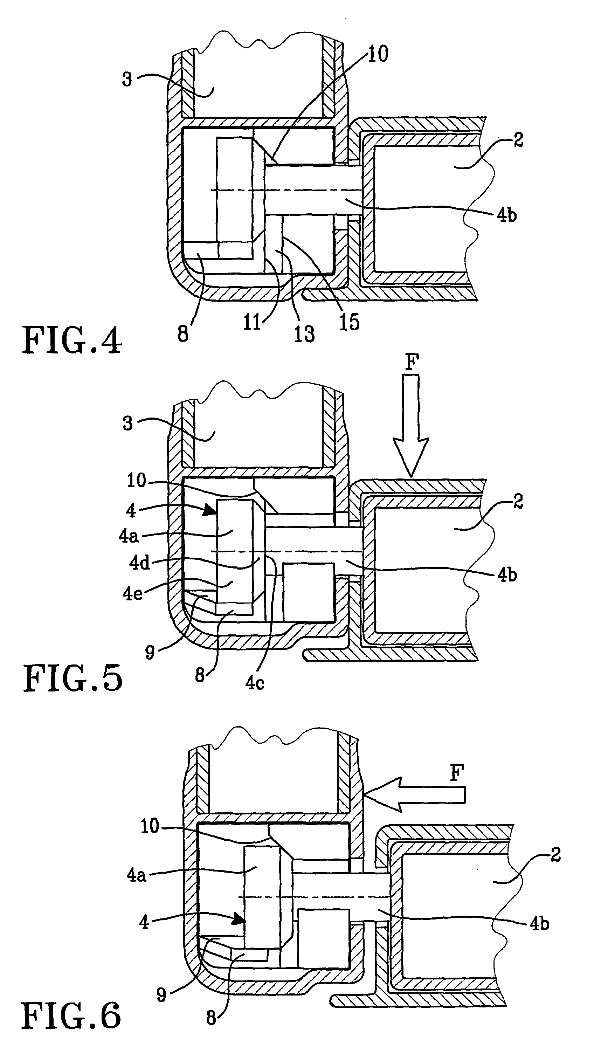

The recess 7 and the first slide surface 9 showed in the figures are arranged on a first side of the slot 5a. On the other side of the slot 5a the locking member 5 has a second slide surface 10 directed toward the head 4a and adjacent to and parallel with the slot 5a, which second slide surface extends from the wall 6 and the locking position 5a and at least beyond the recess 7. At the recess 7 the second slide surface 10, together with the surface 4d of the locking component, is arranged to guide the locking component 4 toward the recess 7 so that the protruding part 8 is moved away during spring action and to enable the shaft 4b of the locking component to reach the recess 7, when a certain smallest force F acting upon the second flap 3. Thus, in this case the locking component 4 is loaded by a tensile force by the second flap 3, see fig. 6. Thus, in one embodiment said means 10 for guiding the locking component 4 is arranged to transfer said force or a part thereof to the locking component via the head 4a of the locking component.

The second slide surface 10 has an angle of approximately 30-60° and preferably approximately 45° in relation to the longitudinal direction of the locking component 4, so that when the device is opened and the locking component 4 is loaded by a tensile force by the second flap 3, see fig. 6, the head 4a slides perpendicular to the longitudinal direction of the second slide surface 10 and toward the recess 7. When a force F originated from the first flap 2 is present, see fig. 5, the locking component 4 is substantially subjected to a bending loading and when the device is opened it is moved toward the first slide surface 9 and the recess 7, substantially without sliding on the second slide surface 10. When the both flaps 2, 3 each is effected by a force F, a combination of these two movements and slides takes place when the device is opened.

When the locking component 4 is in the locking member 5, the locking component 4 is supported by a locking surface 11 via the head 4a, in a plane substantially perpendicular to the longitudinal direction of the locking component 4. The locking surface 11 is designed with a shape corresponding to the head 4a of the locking component, so that a large locking surface carrying the force is obtained, which results in a stable locking position to the locking component 4 in the locking member 5.

Furthermore, the locking member 5 has a guide surface 13, arranged to guide the locking component 4 toward the recess 7 when the device is opened. The guide surface 13 is present between the locking position and the recess 7 and is arranged so that the first surface 4c of the head may slide on the guide surface 13 when the device is opened, whereby the second flap 3 may be moved somewhat, see fig. 6. In this way it is facilitated to the head 4a to slide along the slot 5a.

At the recess 7 the locking member 5 has a support surface 15 in a plane substantially perpendicular to the longitudinal direction of the locking component. The support surface 15 is designed with a shape corresponding to the head 4a of the locking component, so that a large surface carrying the force in the longitudinal direction of the locking component 4 is obtained, which results in a stable position to the locking component 4 in the recess 7. For the same reason, also the recess 7 is designed with a shape corresponding to the locking component 4.

Thus, the recess 7 makes it more difficult to open the locking device 1 by the fact that the resistance against movement of the locking component 4 in a direction toward the position in which the locking device is open, increases when the locking component is in the recess 7, independent of against which flap 2, 3 for example a load has been tipped over or been displaced.

The force F which is required to bring the locking component 4 into the recess 7 may be varied in many ways, for example the angles of the slide- and contact surfaces between the locking component 4 and the locking member 5 may be changed. Another possibility is to vary the spring force in the protruding part 8.

The invention shall not be apprehended as delimited by the described examples above, but may be modified within the scope of the claims, for example the head 4a of the locking component may be substantially globular and the slide surfaces may have surfaces corresponding to this globe shape.

### COMPILATION OF REFERENCE NUMERALS

- 1: locking device
- 2: first flap
- 3: second flap
- 4: locking component
- 4a: head
- 4b: shaft
- 4c: main surface perpendicular to the longitudinal direction of the rod
- 4d: angled main surface
- 5: locking member
- 5a: slot
- 6: wall
- 7: recess
- 8: protruding part
- 9: first slide surface
- 10: second slide surface
- 11: locking surface
- 13: guide surface
- 15: support surface
- 16: through opening

## Claims

1. A locking device (1) at loading flaps (2, 3) for vehicles or the like, the device being of the type which locks the loading flaps (2, 3) relative to each other and indicates that a force (F) acting upon one or both of the flaps in a direction away from the platform of the vehicle is present, the locking device (1) comprising a locking component (4) at the side edge of one of the flaps (2) and a locking member (5) at the side edge of the second flap (3) co-operating with the locking component, the locking member (5) being designed with a substantially rectangular slot (5a), into which the locking component (4) is insertable, and the locking member (5) being provided with a means (7) arranged to counteract removal of the locking component (4) from the slot (5a) in a direction toward the position in which the locking device is open during the influence of said force (F), **characterized in that** said means (7) is a recess (7) shaped on a first side of the slot (5a) and adjacent thereto in the locking member (5), and that a means (10) is arranged on the other side of the slot (5a) at the recess (7) to guide the locking component (4) toward the recess (7) when a force acts upon said second flap (3).

2. A locking device according to claim 1, **characterized in that** the locking component (4) is movably arranged along the slot (5a) between a position in which the locking device (1) is locked and a position in which the locking device is open.

3. A locking device according to claim 1 or 2, **characterized in that** said means (7) is arranged between the positions of the locking component (4) in which the locking device (1) is locked and open, respectively.

4. A locking device according to claim 1, **characterized in that** a means (8) is arranged on said first side of the slot (5a) at the recess (7) to be moved away during spring action by a certain smallest force (F) acting upon the first flap (2) and to enable the locking component (4) to reach the recess (7).

5. A locking device according to claim 4, **characterized in that** said means (8) is arranged to guide the locking component (4) to beyond the recess (7) for a certain largest force (F) acting upon the first flap (3) when the locking component is moved along the slot (5a).

6. A locking device according to claim 1, **characterized in that** the recess (7) has a shape corresponding to the locking component (4).

7. A locking device according to any preceding claim, **characterized in that** the locking component (4) has a head (4a) arranged to prevent the locking component from passing through the slot (5a) in the longitudinal direction of the locking component (4).

8. A locking device according to claim 7, **characterized in that** said means (10) for guiding the locking component (4) is arranged to transfer said force (F) or a part thereof to the locking component (4) via the head (4a) of the locking component.

9. A locking device according to claim 1, **characterized in that** the recess (7) is designed so that a movement of the locking device (4), from the recess and in a direction from the position of the locking component for which the locking device is open, may be accomplished by a small force in relation to what is required in a movement of the locking component from the recess and in the opposite direction.

10. A locking device according to claim 9, **characterized in that** the part of the limiting surface (7b) of the recess (7) that the locking component (4) passes in said movement from the recess, and in a direction from the position of the locking component for which the locking device is open, extends in a direction (27) which has a relatively small deviation from the main longitudinal direction (28) of the slot (5a).

11. A locking device according to claim 10, **characterized in that** said direction (27) of extension forms an angle α with the main longitudinal direction (28) of the slot (5a) which is less than or equal to 45°.

12. A locking device according to claim 10, **characterized in that** said direction (27) of extension forms an angle α with the main longitudinal direction (28) of the slot (5a) which is less than or equal to 30°.

13. A locking device according to claim 10, **characterized in that** said direction (27) of extension forms an angle α with the main longitudinal direction (28) of the slot (5a) which is less than or equal to 20°.

14. A locking device according to claim 10, **characterized in that** said direction (27) of extension forms an angle α with the main longitudinal direction (28) of the slot (5a) which is approximately equal to 15°.

## Patentansprüche

1. Verriegelungsvorrichtung (1) an Ladeklappen (2, 3) für Fahrzeuge oder dergleichen, von der Art, bei welcher die Ladeklappen (2, 3) bezüglich zu einander verriegelt werden und angezeigt wird, dass eine Kraft (F) vorliegt, welche auf eine oder beide Klappen in einer Richtung von der Ladefläche weg einwirkt, wobei die Verriegelungsvorrichtung (1) an der seitlichen Kante einer der Klappen (2) ein Verriegelungsteil (4) und an der seitlichen Kante der zweiten Klappe (3) ein Verriegelungselement (5) aufweist, welches mit dem Verriegelungsteil zusammenwirkt, wobei das Verriegelungselement (5) mit einem im Wesentlichen rechteckigen Schlitz (5a) ausgebildet ist, in welchem das Verriegelungsteil (4) einsetzbar ist, und wobei das Verriegelungselement (5) mit einer Einrichtung (7) versehen ist, welche so angeordnet ist, dass sie einem Herausbewegen des Verriegelungsteils (4) aus dem Schlitz (5a) in einer Richtung zu der Position hin entgegenwirkt, in welcher die Verriegelungsvorrichtung während der Einwirkung der Kraft (F) offen ist, **dadurch gekennzeichnet, dass** die Einrichtung (7) eine Vertiefung (7) ist, die auf einer ersten Seite des Schlitzes (5a) diesem benachbart in dem Verriegelungselement (5) ausgeformt ist, und dass eine Einrichtung (10) auf der anderen Seite des Schlitzes (5a) an der Vertiefung (7) angeordnet ist, um das Verriegelungsteil (4) zu der Vertiefung (7) hin zu führen, wenn auf die zweite Klappe (3) eine Kraft einwirkt.

2. Verriegelungsvorrichtung nach Anspruch 1, **dadurch gekennzeichnet, dass** das Verriegelungsteil (4) entlang des Schlitzes (5a) zwischen einer Position, in welcher die Verriegelungsvorrichtung (1) verriegelt ist, und einer Position, in welcher die Verriegelungsvorrichtung offen ist, beweglich angeordnet ist.

3. Verriegelungsvorrichtung nach Anspruch 1 oder 2, **dadurch gekennzeichnet, dass** die Einrichtung (7) zwischen den Positionen des Verriegelungsteils (4) angeordnet ist, in welchen die Verriegelungsvorrichtung (1) verriegelt bzw. offen ist.

4. Verriegelungsvorrichtung nach Anspruch 1, **dadurch gekennzeichnet, dass** eine Einrichtung (8) auf der ersten Seite des Schlitzes (5a) an der Vertiefung (7) so angeordnet ist, dass sie während der Einwirkung einer Feder durch eine bestimmte kleinste Kraft (F) wegbewegt wird, mit welcher die erste Klappe (2) beaufschlagt wird, und dass sie es ermöglicht, dass das Verriegelungsteil (4) die Vertiefung (7) erreicht.

5. Verriegelungsvorrichtung nach Anspruch 4, **dadurch gekennzeichnet, dass** die Einrichtung (8) so angeordnet ist, dass sie das Verriegelungsteil (4) bis zu einer Position jenseits der Vertiefung (7) führt, damit eine bestimmte größte Kraft (F) auf die erste Klappe (3) einwirkt, wenn das Verriegelungsteil entlang des Schlitzes (5a) bewegt wird.

6. Verriegelungsvorrichtung nach Anspruch 1, **dadurch gekennzeichnet, dass** die Vertiefung (7) eine Form aufweist, welche dem Verriegelungsteil (4) entspricht.

7. Verriegelungsvorrichtung nach einem der vorhergehenden Ansprüche, **dadurch gekennzeichnet, dass** das Verriegelungsteil (4) einen Kopf (4a) aufweist, der so angeordnet ist, dass er ein Durchführen des Verriegelungsteils durch den Schlitz (5a) in Längsrichtung des Verriegelungsteils (4) verhindert.

8. Verriegelungsvorrichtung nach Anspruch 7, **dadurch gekennzeichnet, dass** die Einrichtung (10) zum Führen des Verriegelungsteils (4) so angeordnet ist, dass sie die Kraft (F) oder einen Teil derselben über den Kopf (4a) des Verriegelungsteils auf das Verriegelungsteil (4) überträgt.

9. Verriegelungsvorrichtung nach Anspruch 1, **dadurch gekennzeichnet, dass** die Vertiefung (7) so ausgelegt ist, dass eine Bewegung der Verriegelungsvorrichtung (4) von der Vertiefung weg in einer Richtung von der Position des Verriegelungsteils aus, bei welcher die Verriegelungsvorrichtung geöffnet ist, mittels einer Kraft herbeiführbar ist, die im Vergleich zu der Kraft klein ist, die bei einer Bewegung des Verriegelungsteils von der Vertiefung aus in entgegen gesetzter Richtung erforderlich ist.

10. Verriegelungsvorrichtung nach Anspruch 9, **dadurch gekennzeichnet, dass** der Teil der Begrenzungsfläche (7b) der Vertiefung, an welcher sich das Verriegelungsteil (4) bei der Bewegung von der Vertiefung weg und in einer Richtung von der Position des Verriegelungsteils aus vorbei bewegt, bei welcher die Verriegelungsvorrichtung offen ist, in einer Richtung (27) verläuft, die gegenüber der Hauptlängsrichtung (28) des Schlitzes (5a) eine vergleichsweise kleine Abweichung zeigt.

11. Verriegelungsvorrichtung nach Anspruch 10, **dadurch gekennzeichnet, dass** die Erstreckungsrichtung (27) gegenüber der Hauptlängsrichtung (28) des Schlitzes (5a) einen Winkel α einschließt, der kleiner oder gleich 45° ist.

12. Verriegelungsvorrichtung nach Anspruch 10, **dadurch gekennzeichnet, dass** die Erstreckungsrichtung (27) gegenüber der Hauptlängsrichtung (28) des Schlitzes (5a) einen Winkel α einschließt, der kleiner oder gleich 30° ist.

13. Verriegelungsvorrichtung nach Anspruch 10, **dadurch gekennzeichnet, dass** die Erstreckungsrichtung (27) gegenüber der Hauptlängsrichtung (28) des Schlitzes (5a) einen Winkel α einschließt, der kleiner oder gleich 20° ist.

14. Verriegelungsvorrichtung nach Anspruch 10, **dadurch gekennzeichnet, dass** die Erstreckungsrichtung (27) gegenüber der Hauptlängsrichtung (28) des Schlitzes (5a) einen Winkel α einschließt, der kleiner oder gleich 15° ist.

## Revendications

1. Dispositif de verrouillage (1) sur des volets (2, 3) de chargement pour des véhicules ou similaires, le dispositif étant du type qui verrouille les volets (2, 3) de chargement l'un par rapport à l'autre et indique qu'une force (F) agissant sur l'un ou les deux volets dans une direction s'éloignant de la plateforme du véhicule est présente, le dispositif de verrouillage (1) comprenant un organe de verrouillage (4) sur le bord latéral d'un des volets (2) et un élément de verrouillage (5) sur le bord latéral du deuxième volet (3) coopérant avec le composant de verrrouillage, l'élément de verrouillage (5) étant conçu avec une fente (5a) essentiellement rectangulaire, dans laquelle l'organe de verrouillage (4) est insérable, et l'élément de verrouillage (5) étant muni d'un moyen (7) prévu pour contrecarrer le retrait de l'organe de verrouillage (4) de la fente (5a) dans une direction allant vers la position dans laquelle le dispositif de verrouillage est ouvert pendant l'influence de ladite force (F), ***caractérisé en ce que*** ledit moyen (7) est un évidement (7) ménagé sur un premier côté de la fente (5a) et adjacent à celle-ci dans l'élément de verrouillage (5), et **en ce qu'**un moyen (10) est prévu sur l'autre côté de la fente (5a) au niveau de l'évidement (7) pour guider l'organe de verrouillage (4) vers l'évidement (7) lorsqu'une force agit sur ledit deuxième volet (3).

2. Dispositif de verrouillage selon la revendication 1, ***caractérisé en ce que*** l'organe de verrouillage (4) est agencé de manière mobile le long de la fente (5a) entre une position dans laquelle le dispositif de verrouillage (1) est verrouillé et une position dans laquelle le dispositif de verrouillage est ouvert.

3. Dispositif de verrouillage selon la revendication 1 ou 2, ***caractérisé en ce que*** ledit moyen (7) est agencé entre les positions de l'organe de verrouillage (4) dans lesquelles le dispositif de verrouillage (1) est respectivement verrouillé et ouvert.

4. Dispositif de verrouillage selon la revendication 1, ***caractérisé en ce qu'**un* moyen (8) est agencé sur ledit premier côté de la fente (5a) au niveau de l'évidement (7) de manière à être éloigné pendant une action de ressort exercée par une certaine plus petite force (F) agissant sur le premier volet (2) et pour permettre à l'organe de verrouillage (4) d'atteindre l'évidement (7).

5. Dispositif de verrouillage selon la revendication 4, ***caractérisé en ce que*** ledit moyen (8) est agencé pour guider l'organe de verrouillage (4) au-delà de l'évidement (7) pour une certaine plus grande force (F) agissant sur le premier volet (2) lorsque l'organe de verrouillage est déplacé le long de la fente (5a).

6. Dispositif de verrouillage selon la revendication 1, ***caractérisé en ce que*** l'évidement (7) possède une forme correspondant à l'organe de verrouillage (4).

7. Dispositif de verrouillage selon l'une quelconque des revendications précédentes, ***caractérisé en ce que*** l'organe de verrouillage (4) a une tête (4a) agencée pour empêcher l'organe de verrouillage de passer à travers la fente (5a) dans la direction longitudinale de l'organe de verrouillage (4).

8. Dispositif de verrouillage selon la revendication 7, ***caractérisé en ce que*** ledit moyen (10) de guidage de l'organe de.verrouillage (4) est agencé pour transférer ladite force (F) ou une partie de celle-ci à l'organe de verrouillage (4) via la tête (4a) de l'organe de verrouillage.

9. Dispositif de verrouillage selon la revendication 1, ***caractérisé en ce que*** l'évidement (7) est conçu de telle sorte qu'un déplacement de l'organe de verrouillage (4) depuis l'évidement et dans une direction à partir de la position de l'organe de verrouillage dans laquelle le dispositif de verrouillage est ouvert, peut être accompli par une faible force en relation avec ce qui est nécessaire dans un déplacement de l'organe de verrouillage à partir de l'évidement et dans la direction opposée.

10. Dispositif de verrouillage selon la revendication 9, ***caractérisé en ce que*** la partie de la surface limitante (7b) de l'évidement (7) que l'organe de verrouillage (4) dépasse dans ledit déplacement depuis l'évidement, et dans une direction à partir de la position de l'organe de verrouillage dans laquelle le dispositif de verrouillage est ouvert, s'étend dans une direction (27) qui présente une déviation relativement faible par rapport à la direction longitudinale principale (28) de la fente (5a).

11. Dispositif de verrouillage selon la revendication 10, ***caractérisé en ce que*** ladite direction (27) d'extension forme un angle α avec la direction longitudinale principale (28) de la fente (5a) qui est inférieur ou égal à 45°.

12. Dispositif de verrouillage selon la revendication 10, ***caractérisé en ce que*** ladite direction (27) d'extension forme un angle α avec la direction longitudinale principale (28) de la fente (5a) qui est inférieur ou égal à 30°.

13. Dispositif de verrouillage selon la revendication 10, ***caractérisé en ce que*** ladite direction (27) d'extension forme un angle α avec la direction longitudinale principale (28) de la fente (5a) qui est inférieur ou égal à 20°.

14. Dispositif de verrouillage selon la revendication 10, ***caractérisé en ce que*** ladite direction (27) d'extension forme un angle α avec la direction longitudinale principale (28) de la fente (5a) qui est approximativement égal à 15°.
